# FASCICULE DE BREVET EUROPEEN

(11) **EP 2 892 942 B1**
(45) Date de publication et mention de la délivrance du brevet: **24.01.2024**
(21) Numéro de dépôt: 13762190.0
(22) Date de dépôt: 27.08.2013
(51) Int. Cl.: C08G 69/36, C08L 77/06, C08L 77/02, B32B 27/34, A43B 13/04, A43B 5/00, A43B 1/14

(54) **COPOLYAMIDE, COMPOSITION COMPRENANT UN TEL COPOLYAMIDE ET LEURS UTILISATIONS**
COPOLYAMID, ZUSAMMENSETZUNG MIT EINEM SOLCHEN COPOLYAMID UND VERWENDUNGEN DAVON
COPOLYAMIDE, COMPOSITION COMPRISING SUCH A COPOLYAMIDE AND USES THEREOF

(30) Priorité: 04.09.2012 FR 1258232
(43) Date de publication de la demande: 15.07.2015
(73) Titulaire: Arkema France, 92700 Colombes (FR)
(72) Inventeur: BLONDEL, Philippe, F-27300 Bernay (FR); BRIFFAUD, Thierry, F-27300 Bernay (FR)
(74) Mandataire: Arkema Patent
(86) Numéro de dépôt international: PCT/FR2013/051972
(87) Numéro de publication internationale: WO 2014/037647

(56) Documents cités:
- EP-A1- 0 982 342
- DE-A1- 1 944 848
- FR-A1- 2 685 702
- US-A1- 2005 058 789
- US-A1- 2007 122 615

## Description

La présente invention se rapporte à un copolyamide, à son procédé de préparation ainsi qu'à ses utilisations, notamment dans la fabrication d'objets divers combinant transparence, facilité de décoration et résistance mécanique aux sollicitations répétées. Parmi ces objets, on peut citer les biens de consommation courante tels que des articles de sport et, plus particulièrement des chaussures de sport.

L'invention se rapporte également à une composition comprenant un tel copolyamide ainsi qu'aux utilisations de cette composition, notamment dans la fabrication de tout ou partie des objets mentionnés ci-dessus.

La présente invention se rapporte enfin à une chaussure, et notamment à une chaussure de sport mettant en oeuvre ce copolyamide ou cette composition.

### [L'art antérieur et le problème technique]

Dans le domaine de la chaussure, et notamment dans le domaine du sport, on cherche actuellement à réaliser des semelles qui soient relativement rigides, qui répondent à un test de fatigue connu sous la dénomination "Ross Flex" et qui, en outre, soient transparentes.

Par le terme de "semelle", on entend dans la présente description, la semelle dans son acception générale, mais également des éléments de la chaussure et du système d'amortissement, et notamment la semelle intermédiaire ou la semelle externe.

Différents polymères thermoplastiques sont actuellement disponibles sur le marché pour la réalisation de semelles de chaussures de sport. Parmi ces polymères, les polyamides sont couramment utilisés, en particulier les polyamides amorphes.

De tels polyamides sont particulièrement intéressants car ils présentent de très bonnes propriétés mécaniques et sont en outre transparents. Toutefois, ils ne répondent pas au test de fatigue "Ross Flex" et ne peuvent donc pas être utilisés pour la réalisation de pièces sollicitées en flexion à répétition.

D'autres polymères transparents, qui répondent par ailleurs au test de fatigue, sont couramment utilisés pour la réalisation des semelles de chaussures de sport : il s'agit de copolymères à blocs polyamides et blocs polyéthers, connus sous la dénomination commerciale Pebax^{®}. Toutefois, ces polymères sont trop souples au regard des exigences requises.

US 2007/0122615 décrit un procédé en deux étapes, à savoir que le lauryllactame est tout d'abord polymérisé en présence d'un limiteur de chaîne (acide dodécanedioïque) et le produit obtenu est ensuite mis à réagir avec du bis(4-aminocyclohéxyl)méthane (PACM).

Il y a donc un besoin réel de trouver un polymère permettant de répondre simultanément aux trois critères cités ci-dessus, à savoir :
- être suffisamment rigides et présenter un module de flexion compris entre 1000 et 1500 MPa (mesuré selon la norme ISO...),
- être transparents, c'est-à-dire présenter un coefficient de transmission lumineuse supérieur ou égal à 75% (mesuré à une longueur d'onde de 560 nm et pour une épaisseur de plaque de 2 mm), et
- répondre au test de fatigue "Ross Flex" qui sera détaillé plus loin.

Le document US 2008/0119632 décrit une composition transparente comprenant un copolyamide pour la fabrication d'articles transparents imprimables. Ces articles se présentent plus particulièrement sous la forme de films destinés à constituer des dessus de skis. Le copolyamide de la composition comprend :
- de 65 à 99% mol d'un mélange équimolaire composé d'une diamine aliphatique linéaire et d'un acide dicarboxylique aliphatique linéaire, ce mélange comprenant un nombre moyen d'atomes de carbone compris entre 8 et 12,
- de 1 à 35% mol d'un mélange équimolaire d'une diamine cycloaliphatique et d'un acide dicarboxylique.

Un tel copolyamide répond aux trois critères de rigidité, de transparence et de fatigue énoncés ci-dessus. Toutefois, la transformation ou mise en forme d'un tel copolyamide par moulage n'est pas du tout satisfaisante. On observe en effet non seulement la formation de bulles dans la masse moulée, mais l'opération de démoulage est difficile, le copolyamide collant aux parois du moule. Par conséquent, l'utilisation d'un tel copolyamide pour la réalisation, par moulage, de semelles de chaussure n'est pas envisageable.

Le but de la présente invention est donc de proposer un polymère qui satisfasse simultanément les trois critères de rigidité, de transparence et de fatigue ci-dessus et qui puisse être facilement mis en oeuvre par moulage, en particulier pour la réalisation d'articles moulés tels qu'une semelle de chaussure.

### [Brève description de l'invention]

Ce but est atteint par un copolyamide comprenant au moins deux motifs répétitifs distincts répondant à la formulation générale suivante :

A/X.Y

dans laquelle :
▪ A est un motif répétitif aliphatique choisi parmi un motif obtenu à partir d'au moins un aminoacide et un motif obtenu à partir d'au moins un lactame, l'acide aminocarboxylique comprenant de 9 à 12 atomes de carbone, préférentiellement l'acide 11-aminoundécanoïque (11) et le lactame comprenant de 9 à 12 atomes de carbone, préférentiellement le lauryllactame (12), et
. X.Y désigne un motif répétitif obtenu à partir de la polycondensation d'au moins une diamine cycloaliphatique et d'au moins un acide dicarboxylique choisi parmi les acides dicarboxyliques aromatiques comprenant de 6 à 18 atomes de carbone, ledit acide dicarboxylique aromatique étant choisi parmi l'acide isophtalique (noté I) et un acide naphtalénique,
caractérisé en ce que la proportion pondérale en motif A dans le copolyamide A/X.Y est supérieure ou égale à 91%.

En effet, on observe qu'à partir de 91% de teneur pondérale en motif répétitif A dans le copolyamide A/X.Y, les motifs répétitifs A et X.Y étant tels que définis ci-dessus, les critères de rigidité, de transparence et de fatigue sont atteints et ce, quelles que soient les conditions de transformation. En particulier, la mise en oeuvre par moulage est tout à fait satisfaisante : aucun gauchissement ("warpage" en anglais) de la masse moulée n'est observable. Pour une teneur pondérale inférieure à 91%, on observe au contraire que le copolyamide ne répond plus au test de fatigue "Ross Flex".

D'autres caractéristiques, aspects, objets et avantages de la présente invention apparaîtront encore plus clairement à la lecture de la description et des exemples qui suivent.

En particulier, la présente invention porte également sur un procédé de préparation d'un copolyamide, à ses utilisations ainsi qu'à une composition comprenant un tel copolyamide et aux utilisations d'une telle composition.

La présente invention se rapporte également à une chaussure, et notamment à une chaussure de sport.

Il est précisé que les expressions "compris entre... et ..." et "comprenant de ... à ..." utilisées dans les paragraphes précédents, mais également dans la suite de la présente description, doivent s'entendre comme incluant chacune des bornes mentionnées.

### [Description détaillée de l'invention]

Le copolyamide selon l'invention comprend au moins deux motifs répétitifs distincts répondant à la formulation générale suivante :

A/X.Y

dans laquelle :
. A est un motif répétitif aliphatique choisi parmi un motif obtenu à partir d'au moins un aminoacide et un motif obtenu à partir d'au moins un lactame, l'acide aminocarboxylique comprenant de 9 à 12 atomes de carbone, préférentiellement l'acide 11-aminoundécanoïque (11) et le lactame comprenant de 9 à 12 atomes de carbone, préférentiellement le lauryllactame (12), et
. X.Y désigne un motif répétitif obtenu à partir de la polycondensation d'au moins une diamine cycloaliphatique et d'au moins un acide dicarboxylique choisi parmi les acides dicarboxyliques aromatiques comprenant de 6 à 18 atomes de carbone, ledit acide dicarboxylique aromatique étant choisi parmi l'acide isophtalique (noté I) et un acide naphtalénique,
caractérisé en ce que la proportion pondérale en motif A dans le copolyamide A/X.Y est supérieure ou égale à 91%.

Dans le copolyamide A/X.Y, la proportion pondérale en motif répétitif A est supérieure ou égale à 91 %. Par conséquent, la teneur en motif répétitif X.Y est inférieure ou égale à 9%.

Cette proportion pondérale en motif A est avantageusement comprise entre 91,5% et 99%, avantageusement de 91,5% à 97%, plus préférentiellement entre 92% et 95%, particulièrement de 92 à 94% et avantageusement de 92 à 93,3%, le complément à 100% correspondant à la proportion pondérale du motif répétitif X.Y.

### Motif répétitif A

Dans une première variante de l'invention, le motif répétitif A est obtenu à partir d'un acide aminocarboxylique comprenant de 9 à 12 atomes de carbone. Il peut ainsi être choisi parmi l'acide 9-aminononanoïque (noté 9), l'acide 10-aminodécanoïque (noté 10), l'acide 11-aminoundécanoïque (noté 11) et l'acide 12-aminododécanoïque (noté 12).

Préférentiellement, le motif répétitif A est obtenu à partir de l'acide 11-aminoundécanoïque (11).

Dans une deuxième variante de l'invention, le motif répétitif A est obtenu à partir d'un lactame comprenant de 9 à 12 atomes de carbone. Il peut ainsi être choisi parmi le décanolactame (noté 10), l'undécanolactame (noté 11) et le laurolactame ou lauryllactame (noté 12).

Préférentiellement, le motif répétitif A est obtenu à partir du lauryllactame (12).

De manière plus particulièrement préférée, le motif répétitif A est obtenu à partir d'un seul acide aminocarboxylique ou d'un seul lactame.

Toutefois, on peut tout à fait envisager de mettre en oeuvre, pour l'obtention de ce même motif A, un mélange de deux ou de plusieurs acides aminocarboxyliques, un mélange de deux ou de plusieurs lactames, mais également un mélange d'un, de deux ou de plusieurs acides aminocarboxyliques avec un, deux ou plusieurs lactames.

### Motif répétitif X.Y

Le motif répétitif X.Y est un motif obtenu à partir de la polycondensation d'au moins une diamine cycloaliphatique et d'au moins un acide dicarboxylique choisi parmi les acides dicarboxyliques aromatiques.

Les proportions molaires en diamine cycloaliphatique et en acide dicarboxylique sont préférentiellement stoechiométriques.

La diamine cycloaliphatique ainsi que l'acide dicarboxylique comprennent chacun de 4 à 36 atomes de carbone et, avantageusement, de 6 à 18 atomes de carbone.

La diamine cycloaliphatique peut être choisie parmi le bis(3,5-dialkyl-4-aminocyclohexyl)-méthane, le bis(3,5-dialkyl-4-aminocyclohexyl)éthane, le bis(3,5-dialkyl-4-aminocyclohexyl)-propane, le bis(3,5-dialkyl-4-aminocyclo-hexyl)-butane, le bis-(3-méthyl-4-aminocyclohexyl)-méthane ou 3'-diméthyl-4,4'-diamino-dicyclohexyl-méthane couramment dénommé "BMACM" ou "MACM" (et noté B ci-après), le p-bis(aminocyclohexyl)-méthane couramment dénommé "PACM" (et noté P ci-après), l'isopropylidènedi(cyclohexylamine) couramment dénommé "PACP", l'isophoronediamine (notée IPD ci-après) et le 2,6-bis(amino méthyl)norbornane couramment dénommé "BAMN".

Avantageusement, la diamine cycloaliphatique du motif X.Y est choisie parmi le 3,3'-diméthyl-4,4'-diamino-dicyclohexylméthane (B), le p-bis(aminocyclohexyl)-methane (P) et l'isophoronediamine (IPD).

Dans un mode de réalisation avantageux de l'invention, la diamine cycloaliphatique du motif X.Y est une diamine bicycloaliphatique, en particulier choisie parmi le 3,3'-diméthyl-4,4'-diamino-dicyclohexylméthane (B), le p-bis(aminocyclohexyl)-methane (P).

L'acide dicarboxylique est aromatique, et est choisi parmi l'acide isophtalique (noté I) et un acide naphtalénique.

Dans une version avantageuse, l'acide dicarboxylique du motif X.Y est un acide dicarboxylique aromatique, qui est l'acide isophtalique (I).

Parmi toutes les combinaisons possibles pour les copolyamides A/X.Y, dans lesquelles un acide dicarboxylique aromatique est mis en oeuvre, on retiendra en particulier les copolyamides répondant à l'une des formules choisies parmi 11/B.I, 12/B.I, 11/P.I, 12/P.I, 11/IPD.I, et 12/IPD.I, plus particulièrement les copolyamides répondant à l'une des formules choisies parmi 11/B.I, 12/B.I, 11/P.I, 12/P.I, avantageusement 11/P.I, 12/P.I,

De manière avantageuse, le motif répétitif X.Y est obtenu à partir d'au moins une diamine cycloaliphatique, notamment une diamine bicycloaliphatique et d'un seul acide dicarboxylique, qui est un acide dicarboxylique aromatique choisi parmi l'acide isophtalique (noté I) et l'acide naphtalénique.

De manière préférée, le motif répétitif X.Y est obtenu à partir d'une seule diamine cycloaliphatique, notamment une diamine bicycloaliphatique, et d'un seul acide dicarboxylique qui est un acide dicarboxylique aromatique choisi parmi l'acide isophtalique (noté I) et l'acide naphtalénique.

Toutefois, on peut tout à fait envisager de mettre en oeuvre, pour l'obtention de ce même motif répétitif X.Y, un mélange d'une, de deux ou de plusieurs diamines cycloaliphatiques, notamment un mélange d'une, de deux ou de plusieurs diamines bicycloaliphatiques avec un ou deux acides dicarboxyliques choisis parmi l'acide isophtalique (noté I) et l'acide naphtalénique.

De manière plus particulièrement préférée, le copolyamide selon l'invention est constitué de deux seuls motifs répétitifs A et X.Y :
. le motif répétitif A étant un motif obtenu soit à partir d'un seul acide aminocarboxylique, soit à partir d'un seul lactame,
. le motif répétitif étant obtenu à partir de la polycondensation d'une seule diamine cycloaliphatique, notamment une seule diamine bicycloaliphatique et d'un seul acide dicarboxylique, qui est un acide dicarboxylique aromatique choisi parmi l'acide isophtalique (noté I) et l'acide naphtalénique.

L'invention porte également sur un procédé de préparation d'un copolyamide tel que défini ci-dessus. Ce procédé comprend au moins une étape de polycondensation des co-monomères conduisant aux motifs répétitifs A et X.Y, c'est-à-dire qu'il comprend au moins une étape de polycondensation d'au moins un acide aminocarboxylique comprenant de 9 à 12 atomes de carbone, préférentiellement l'acide 11-aminoundécanoïque (11), et/ou d'au moins un lactame comprenant de 9 à 12 atomes de carbone, préférentiellement le lauryllactame (12), avec au moins une diamine cycloaliphatique, notamment une diamine bicycloaliphatique et au moins un acide dicarboxylique aromatiques choisi parmi l'acide isophtalique (noté I) et l'acide naphtalénique.

L'invention se rapporte également à une composition comprenant au moins un copolyamide tel que décrit précédemment.

Une composition conforme à l'invention peut comprendre, en plus du copolyamide que l'on vient de décrire, au moins un deuxième polymère.

Avantageusement, ce deuxième polymère peut être choisi parmi un polyamide semi-cristallin, un polyamide amorphe, un copolyamide semi-cristallin, un copolyamide amorphe, un polyetheramide, un polyétheramide, un polyesteramide et leurs mélanges.

La composition selon l'invention peut également comprendre en outre au moins un additif.

Cet additif peut notamment être choisi parmi les charges, les fibres, les colorants, les stabilisants (notamment les stabilisants UV), les plastifiants, les modifiants-chocs, les agents tensioactifs, les pigments, les azurants, les anti-oxydants, les cires naturelles et leurs mélanges.

Parmi les charges, on peut notamment citer le talc, la silice, le noir de carbone, les nanotubes de carbone, le graphite expansé, l'oxyde de titane ou encore les billes de verre.

Le copolyamide selon l'invention ou encore la composition selon l'invention peut être utilisé(e) pour constituer une structure.

Cette structure peut être monocouche lorsqu'elle n'est formée que du copolyamide ou que de la composition selon l'invention.

Cette structure peut également être une structure multicouche, lorsqu'elle comprend au moins deux couches et que l'une au moins des différentes couches formant la structure est formée du copolyamide ou de la composition selon l'invention.

La structure, qu'elle soit monocouche ou multicouche, peut notamment se présenter sous la forme de fibres, d'un film, d'une feuille, d'un tube, d'un corps creux, d'une pièce moulée ou d'une pièce injectée.

De telles structures, en particulier lorsqu'elles se présentent sous la forme de film ou de feuille, peuvent être décorées. Ces structures peuvent être utilisées pour fabriquer des objets, notamment avec la mise d'une étape de sur-injection pour l'obtention de pièces.

Le copolyamide selon l'invention ou encore la composition selon l'invention peut avantageusement être utilisé(e) pour la fabrication d'un article moulé transparent. Un tel article peut être une semelle de chaussure ou un élément constitutif d'une semelle de chaussure, en particulier une semelle de chaussure de sport ou un élément de semelle de chaussure de sport.

Le copolyamide selon l'invention ou encore la composition selon l'invention peut encore être utilisé(e) pour la fabrication de dessus de ski ; en particulier, le copolyamide ou la composition peut être transformé(e) en films ou feuilles, ces derniers pouvant éventuellement être décorés, puis mis en oeuvre par des procédés de surmoulage.

Le copolyamide selon l'invention ou encore la composition selon l'invention peut également être utilisé(e) pour la fabrication de panneaux photovoltaïques.

La présente invention concerne enfin une chaussure, et notamment une chaussure de sport, cette chaussure comprenant une semelle. Selon l'invention, cette semelle est constituée en tout ou partie à partir du copolyamide ou de la composition selon l'invention.

On rappelle que, dans le présent texte, on entend par "semelle", la semelle dans son acception générale, mais également des éléments de la chaussure et du système d'amortissement, et notamment la semelle intermédiaire ou la semelle externe.

La présente invention va être maintenant décrite dans les exemples ci-dessous, de tels exemples étant donnés à but uniquement illustratif et étant bien évidemment non limitatifs.

### [Exemples]

### Préparation des copolyamides I1 selon l'invention, I2 (hors invention) et C1 à C3 comparatifs

Les co-monomères utilisés pour la synthèse des copolyamides I1, I2, C1, C2 et C3 sont les suivants :
- l'acide 11-aminoundécanoïque (noté A11)
- la décanediamine (notée DA10)
- l'acide décanedioïque (noté DC10)
- le bis-(3-méthyl-4-aminocyclohexyl)-méthane (noté B),
- l'acide isophtalique (noté I)
- l'acide adipique (noté DC6)

Les proportions molaires et pondérales de ces différents copolyamides sont reportées dans le Tableau 1 ci-dessous.

Le procédé de préparation, transposable pour l'ensemble des copolyamides synthétisés, va maintenant être décrit de manière détaillée pour le copolyamide I1.

Le copolyamide I1 a été préparé à partir des teneurs pondérales des différents composés suivants :
- 30,54 kg d'acide 11-aminoundécanoïque (25 mol)
- 1,45 kg de bis-(3-méthyl-4-aminocyclohexyl)-méthane (1 mol)
- 1,01 kg d'acide isophtalique (1 mol)
- 214,5 g d'acide stéarique
- 6,6 g d'acide hypophosphoreux (H₃PO₂) à 50% dans l'eau
- 4 kg d'eau

Les co-monomères ci-dessus sont introduits dans un réacteur autoclave de 92 I qui, une fois fermé, est inerté sous azote et chauffé sous agitation (40 tr/min) à 240°C sous une pression de 30 bars. La pression est ensuite diminuée jusqu'à la pression atmosphérique pour obtenir une température de 270°C. Le réacteur est alors dégazé par un balayage d'azote pour atteindre le couple donnant une viscosité inhérente comprise entre 1.10 à 1.60 dl/g (la viscosité inhérente étant mesurée à partir de 0.5 g de copolyamide solubilisé à 25°C dans le métacrésol).

Le copolyamide obtenu est alors extrudé sous forme de joncs, refroidi dans un bac à eau à température ambiante, puis granulé.

Les granulés obtenus sont ensuite séchés à 80°C pendant 12h sous vide, pour atteindre une teneur en humidité inférieure à 0,1 %.

### Tests conduits

Mesure de la transparence : on a réalisé des plaques de 2 mm d'épaisseur à partir des copolyamides I1, I2 et C1 à C3. On a mesuré, selon la norme ISO 13468, le pourcentage de lumière transmise ou réfléchie à la longueur d'onde de 560 nm sur des plaques de 2 mm préparées à partir des copolyamides. On considère que le copolyamide est transparent à partir de 70% de transmission lumineuse.

Module de flexion : on a réalisé des éprouvettes de traction à partir des copolyamides I1, I2 et C1 à C3 pour déterminer les valeurs de modules de flexion, conformément à la norme ISO 527. Le module de flexion recherché doit être compris entre 1000 et 1500 MPa.

Test de fatigue dit "Ross Flex" : ce test est réalisé conformément à la norme ASTM D1052. On a réalisé des pièces de 2 mm d'épaisseur à partir des copolyamides I1, I2 et C1 à C3. Ces pièces ont été percées d'un trou de 2.5 mm de diamètre puis conditionnées pendant 15 jours à 23°C sous 50% d'humidité relative. Par ce test dit "Ross Flex", on détermine le nombre de fois au bout duquel la pièce, pliée à la hauteur du trou à 60° et à une température de -10°, casse. On considère que la pièce remplit les conditions de ce test lorsque le nombre de cycles est supérieur ou égal à 50000.

Evaluation de la transformation par moulage : les copolyamides I1, I2 et C1 à C3 ont été injectés, dans un moule à 40°C, à une température comprise entre 250 et 270°C et maintenus dans ce moule pendant 25 s. Après un temps de refroidissement de 20 s, les pièces ont été démoulées. Les observations faites lors de l'étape de démoulage et sur l'aspect des pièces moulées obtenues sont rapportées dans le Tableau 1 ci-dessous.

**Tableau 1**

| Exemples | C1 | C2 | C3 | I1 | I2 |
|---|---|---|---|---|---|
| A11 | 20 | - | - | 25 | 26 |
| DA10 | - | 10.75 | 13.5 | - | - |
| DC10 | - | 10.75 | 13.5 | - | - |
| B | 1 | 1 | 1 | 1 | 1 |
| I | 1 | 1 | 1 | 1 | - |
| DC6 | - | - | - | - | 1 |
| motif A (% poids) | 90.8 | 90.8 | 92.6 | 92.5 | 93.1 |
| Transparence (%) | 80 | 90 | 85 | 80 | 78 |
| Module de flexion (MPa) | 1175-1282 | >1000 | >1000 | 1142-1295 | >1000 |
| Ross Flex | casse | casse | >50000 | >50000 | >50000 |
| Moulage | ++ | - | bulles, colle | ++ | ++ |
| Warpage | oui | oui | non | non | non |

On observe que le copolyamide I1, conforme à l'invention, répond aux critères de transparence, de rigidité et au test dit "Ross Flex". En outre, contrairement à l'exemple comparatif C3 où l'on observe la formation de bulles dans la matière moulée et pour lequel l'étape de démoulage est rendue difficile par le fait que le copolyamide colle aux parois du moule, la transformation par moulage est tout à fait satisfaisante. Pour les copolyamides C2 et C3, on observe que le produit est long à cristalliser, ce qui implique un temps de cycle élevé. En outre, on observe des traces d'écoulement sur les pièces moulées.

## Revendications

1. Copolyamide comprenant au moins deux motifs répétitifs distincts répondant à la formulation générale suivante :
A/X.Y
dans laquelle :
. A est un motif répétitif aliphatique choisi parmi un motif obtenu à partir d'au moins un aminoacide et un motif obtenu à partir d'au moins un lactame, l'acide aminocarboxylique comprenant de 9 à 12 atomes de carbone, préférentiellement l'acide 11-aminoundécanoïque (11) et le lactame comprenant de 9 à 12 atomes de carbone, préférentiellement le lauryllactame (12), et
. X.Y désigne un motif répétitif obtenu à partir de la polycondensation d'au moins une diamine cycloaliphatique et d'au moins un acide dicarboxylique choisi parmi les acides dicarboxyliques aromatiques comprenant de 6 à 18 atomes de carbone, ledit acide dicarboxylique aromatique étant choisi parmi l'acide isophtalique (noté I) et un acide naphtalénique,
**caractérisé en ce que** la proportion pondérale en motif A dans le copolyamide A/X.Y est supérieure ou égale à 91%.

2. Copolyamide selon la revendication 1, **caractérisé en ce que** la diamine cycloaliphatique du motif X.Y est choisie parmi le 3,3'-diméthyl-4,4'-diaminodicyclohexylméthane (B), le p-bis(aminocyclohexyl)-methane (P) et l'isophoronediamine (IPD).

3. Copolyamide selon l'une quelconque des revendications 1 ou 2, **caractérisé en ce qu'**il répond à la formule 11/B.I, 12/B.I, 11/P.I, 12/P.I, 11/IPD.I, et 12/IPD.I.

4. Procédé de préparation du copolyamide selon l'une quelconque des revendications 1 à 3, **caractérisé en ce qu'**il comprend une étape de polycondensation des co-monomères conduisant aux motifs répétitifs A et X.Y.

5. Composition comprenant au moins un copolyamide selon l'une quelconque des revendications 1 à 3.

6. Composition selon la revendication 5, **caractérisée en ce qu'**elle comprend en outre au moins un additif, cet additif étant choisi parmi les charges, les fibres, les colorants, les stabilisants, notamment UV, les plastifiants, les modifiants chocs, les agents tensioactifs, les pigments, les azurants, les anti-oxydants, les cires naturelles et leurs mélanges.

7. Utilisation d'un copolyamide selon l'une quelconque des revendications 1 à 3 ou d'une composition selon l'une quelconque des revendications 5 et 6 pour constituer une structure monocouche ou au moins une couche d'une structure multicouche.

8. Utilisation selon la revendication 7, **caractérisée en ce que** la structure se présente sous la forme de fibres, d'un film, d'une feuille, d'un tube, d'un corps creux, d'une pièce moulée ou d'une pièce injectée.

9. Utilisation d'un polyamide selon l'une quelconque des revendications 1 à 3 ou d'une composition selon l'une quelconque des revendications 5 à 6 pour la fabrication d'un article moulé transparent, tel qu'une semelle de chaussure ou un élément de semelle de chaussure, en particulier d'une chaussure de sport.

10. Chaussure, notamment chaussure de sport, comprenant une semelle, ladite semelle étant réalisée en tout ou partie à partir d'un copolyamide selon l'une quelconque des revendications 1 à 3 ou d'une composition selon l'une quelconque des revendications 5 à 6.

## Patentansprüche

1. Copolyamid, das mindestens zwei getrennte Repetiereinheiten umfasst, die der folgenden allgemeinen Formulierung entsprechen:
A/X.Y
wobei:
• A eine aliphatische Repetiereinheit ist, die aus einer Einheit, die aus mindestens einer Aminosäure erhalten wird, und einer Einheit ausgewählt ist, die aus mindestens einem Lactam erhalten wird, wobei die Aminocarbonsäure 9 bis 12 Kohlenstoffatome, vorzugsweise 11-Aminoundecansäure (11), umfasst und das Lactam 9 bis 12 Kohlenstoffatome, vorzugsweise Lauryllactam (12), umfasst, und
• X.Y eine Repetiereinheit bezeichnet, die aus der Polykondensation mindestens eines cycloaliphatischen Diamins und mindestens einer Dicarbonsäure erhalten wird, die aus aromatischen Dicarbonsäuren ausgewählt ist, die 6 bis 18 Kohlenstoffatome umfassen, wobei die aromatische Dicarbonsäure aus Isophthalsäure (als I bezeichnet) und einer naphtalinischen Säure ausgewählt ist, **dadurch gekennzeichnet, dass** der Gewichtsanteil der Einheit A im Copolyamid A/X.Y mehr als oder gleich 91 % beträgt.

2. Copolyamid nach Anspruch 1, **dadurch gekennzeichnet, dass** das cycloaliphatische Diamin der Einheit X.Y aus 3,3'-Dimethyl-4,4'-diaminodicyclohexylmethan (B), p-Bis(aminocyclohexyl)methan (P) und Isophorondiamin (IPD) ausgewählt ist.

3. Copolyamid nach einem der Ansprüche 1 oder 2, **dadurch gekennzeichnet, dass** es der Formel 11/B.I, 12/B.I, 11/P.I, 12/P.I, 11/IPD.I und 12/IPD.I entspricht.

4. Verfahren zur Herstellung des Copolyamids nach einem der Ansprüche 1 bis 3, **dadurch gekennzeichnet, dass** es einen Schritt der Polykondensation von Comonomeren umfasst, die zu Repetiereinheiten A und X.Y führen.

5. Zusammensetzung, die mindestens ein Copolyamid nach einem der Ansprüche 1 bis 3 umfasst.

6. Zusammensetzung nach Anspruch 5, **dadurch gekennzeichnet, dass** sie außerdem mindestens ein Additiv umfasst, wobei dieses Additiv aus Füllstoffen, Fasern, Farbstoffen, Stabilisatoren, insbesondere UV-Stabilisatoren, Weichmachern, Schlagfestmachern, Tensiden, Pigmenten, Aufhellern, Antioxidantien, natürlichen Wachsen und Mischungen davon ausgewählt ist.

7. Verwendung eines Copolyamids nach einem der Ansprüche 1 bis 3 oder einer Zusammensetzung nach einem der Ansprüche 5 und 6 zur Bildung einer einlagigen Struktur oder mindestens einer Lage einer mehrlagigen Struktur.

8. Verwendung nach Anspruch 7, **dadurch gekennzeichnet, dass** die Struktur in Form von Fasern, einer Folie, einer Bahn, eines Rohrs, eines Hohlkörpers, eines Formteils oder eines Spritzgießteils vorliegt.

9. Verwendung eines Polyamids nach einem der Ansprüche 1 bis 3 oder einer Zusammensetzung nach einem der Ansprüche 5 bis 6 zur Herstellung eines transparenten Formteils, wie einer Schuhsohle oder einem Bestandteil einer Schuhsohle, insbesondere eines Sportschuhs.

10. Schuh, insbesondere Sportschuh, der eine Sohle umfasst, wobei die Sohle ganz oder teilweise aus einem Copolyamid nach einem der Ansprüche 1 bis 3 oder einer Zusammensetzung nach einem der Ansprüche 5 bis 6 hergestellt ist.

## Claims

1. Copolyamide comprising at least two different repeat units corresponding to the following general formula:
A/X.Y
in which:
• A is an aliphatic repeat unit selected from a unit obtained from at least one amino acid and a unit obtained from at least one lactam, the aminocarboxylic acid containing from 9 to 12 carbon atoms, preferably 11-aminoundecanoic acid (11), and the lactam containing from 9 to 12 carbon atoms, preferably lauryllactam (12), and
• X.Y denotes a repeat unit obtained from the polycondensation of at least one cycloaliphatic diamine and of at least one dicarboxylic acid selected from aromatic dicarboxylic acids containing 6 to 18 carbon atoms, said aromatic dicarboxylic acid being selected from isophthalic acid (designated I) and a naphthalenic acid,
**characterized in that** the weight proportion of unit A in the copolyamide A/X.Y is greater than or equal to 91%.

2. Copolyamide according to Claim 1, **characterized in that** the cycloaliphatic diamine of the unit X.Y is selected from 3,3'-dimethyl-4,4'-diaminodicyclohexylmethane (B), p-bis(aminocyclohexyl)methane (P) and isophoronediamine (IPD).

3. Copolyamide according to either of Claims 1 or 2, **characterized in that** it corresponds to formula 11/B.I, 12/B.I, 11/P.I, 12/P.I, 11/IPD.I and 12/IPD.I.

4. Process for preparing the copolyamide according to any one of Claims 1 to 3, **characterized in that** it comprises a step of polycondensation of the comonomers leading to the repeat units A and X.Y.

5. Composition comprising at least one copolyamide according to any one of Claims 1 to 3.

6. Composition according to Claim 5, **characterized in that** it also comprises at least one additive, this additive being selected from fillers, fibres, dyes, stabilizers, especially UV stabilizers, plasticizers, impact modifiers, surfactants, pigments, optical brighteners, antioxidants and natural waxes, and mixtures thereof.

7. Use of a copolyamide according to any one of Claims 1 to 3 or of a composition according to either of Claims 5 and 6, for making a monolayer structure or at least one layer of a multilayer structure.

8. Use according to Claim 7, **characterized in that** the structure is in the form of fibres, a film, a sheet, a tube, a hollow body, a moulded part or an injectionmoulded part.

9. Use of a polyamide according to any one of Claims 1 to 3 or of a composition according to either of Claims 5 and 6, for manufacturing a transparent moulded article, such as a footwear sole or an element of a footwear sole, in particular of sports footwear.

10. Footwear, especially sports footwear, comprising a sole, said sole being made totally or partly from a copolyamide according to any one of Claims 1 to 3 or from a composition according to either of Claims 5 and 6.
